# EUROPEAN PATENT SPECIFICATION

(11) **EP 1 506 051 B1**
(45) Date of publication and mention of the grant of the patent: **07.03.2012**
(21) Application number: 03723528.0
(22) Date of filing: 09.05.2003
(51) Int. Cl.: B01D 50/00, B01D 45/08

(54) **DEVICE AND METHOD FOR SEPARATING MIXTURES**
VORRICHTUNG UND VEFAHREN ZUR TRENNUNG VON MISCHUNGEN
DISPOSITIF ET PROCEDE PERMETTANT DE SEPARER DES MELANGES

(30) Priority: 10.05.2002 NL 1020576
(43) Date of publication of application: 16.02.2005
(73) Proprietor: Flash Technologies N.V., Willemstad, Curaçao (AN); FMC Technologies C.V., 1076 EE Amsterdam (NL)
(72) Inventor: LARNHOLM, Per-Reidar, N-15187 Moss (NO); SCHOOK, Robert, NL-6922 EC Duiven (NL)
(74) Representative: Land, Addick Adrianus Gosling
(86) International application number: PCT/NL2003/000343
(87) International publication number: WO 2003/095069

(56) References cited:
- DE-C- 932 403
- US-A- 3 659 402
- US-A1- 2001 022 137

## Description

The present invention relates to a device and method for separating a mixture of liquid and gas into a substantially gas-containing gas fraction and a substantially liquid-containing liquid fraction.

In the extraction of oil and/or gas it is important to separate the supplied gas and liquid mixtures, for instance into a flow of substantially gas and a flow of substantially liquid. Different separating devices are known for the separating of such gas/liquid mixtures.

A known type of separating device is a so-called demisted in which the gas/liquid mixture is supplied via a channel and is carried through a wire mesh, also referred to as mesh pad, arranged in the channel. Liquid droplets supplied via the channel collide with the wires of the wire mesh arranged perpendicularly in the channel and coalesce to form a liquid layer which is then drained. The known demisters have a relatively small pressure drop and a high separating efficiency. However, because a liquid layer is created, flooding limits the maximum flow rate of the demister. This results in relatively large separating devices.

In order to increase the capacity of such demisters or to reduce the dimensions of the demisters, the wire mesh can be disposed obliquely in the channel. The capacity of the demister could be increased by enlarging the area of the wire mesh onto which flow takes place.

The increase in the capacity of the demister, in combination with a desired separating efficiency, does however seem to be disappointing.

US-A1-2001/0022137 discloses a separating device for separating a mixture of liquid and gas into a substantially gas-containing gas fraction and a substantially liquid-containing liquid fraction, comprising a channel which comprises a feed part for feeding the liquid/gas mixture and a discharge part for discharging the gas fraction separating means arranged in the channel between the feed part and discharge part for separating the supplied liquid/gas mixture into a liquid fraction and a gap fraction, the separating means being arranged obliquely in the channel to enlarge the area of onto which flow takes place. US-A-3 659 402 describes a screen network used in cleaning gases.

It is an object of the present invention to provide a device and method for separating a mixture of liquid and gas into a substantially gas-containing gas fraction and a substantially liquid-containing liquid fraction wherein, given a predetermined separating efficiency, the separation capacity is improved.

The present invention provides a separating device for separating a mixture of liquid and gas into a substantially gas-containing gas fraction and a substantially liquid-containing liquid fraction, comprising a channel which comprises a feed part for feeding the liquid/gas mixture and a discharge part for discharging the gas fraction; separating means arranged in the channel between the feed part and discharge part for separating the supplied liquid/gas mixture into a liquid fraction and a gas fraction, the separating means being arranged obliquely in the channel to enlarge the area of onto which flow takes place, characterized in that the separating means comprise at least one wire mesh, against which wires liquid is collected, and in that guide means for guiding the supplied mixture substantially transversely of the area of the wire mesh onto which flow takes place, are provided in the channel, wherein the guide means comprise a number of guide fins arranged through the wire mesh.

When the wire mesh is disposed obliquely in the channel, the area onto which flow takes place is enlarged relative to a wire mesh arranged perpendicularly of the flow direction in the channel, which increases the processing capacity of the Separating device, but the speed of the mixture through the wire mesh however remains teh same. The larger area onto which flow takes place is therefore not approached at the mixture speed (gas speed) associated with the larger area onto which flow takes place. By providing the wire mesh with a guide means for guiding the flow therealong, the speed at the position of the wire mesh increases to a value associated with the enlarged area onto which flow takes place. The higher speed has the result that a larger quantity of mixture it treated in the available area (cross-section of the channel) and the separating capacity of the separating device thereby increases.

The guide fins have the object of guiding the mixture of liquid and gas flowing therealong through the wire mesh in accordance with a predetermined pattern. As soon as the mixture is "caught" between two guide fins or between a guide fin and a channel wall, the mixture is forced to flow through a determined part of the wire mesh in a direction defined by the fins. The guide fins therefore divide the channel into a number of smaller compartments in which a gas fraction speed prevails which depends on the enlarged wire mesh area onto which flow takes place. The guide fins moreover ensure that, once a mixture part has been "caught" by a pair of guide fins, it flows only, through the compartment associated with the relevant guide fins.

In another preferred embodiment the guide means comprises a number of guide fins arranged fitting onto the outer surface of the wire mesh. In this embodiment the guide fins do not therefore protrude through the wire mesh, but are arranged on one side or preferably on two sides of the wire mesh, this such that the guide fins connect onto the wire mesh.

In a preferred embodiment a guide fin is constructed from a body part protruding through the wire mesh, an upstream end part extending substantially parallel to the flow direction in the feed part of the channel and a downstream end part extending substantially parallel to the flow direction in the discharge part of the channel. In this embodiment the loss of pressure resulting from the presence of the wire mesh with guide fins is relatively small.

In a further preferred embodiment a downward extending liquid drain channel is connected to the channel for draining the liquid fraction under the influence of gravity. The liquid collected on the wires of the wire mesh can thus be drained in simple manner via the liquid drain channel.

A number of partitions provided with perforations are preferably arranged substantially transversely of the guide fins for distributing the liquid/gas mixture flow into a number of compartments.

The wire mesh is arranged obliquely relative to (the flow direction of the mixture in) the channel, preferably at an angle between 10 and 80°, and preferably between 40 and 50°. At such an angle between the flow direction of the supplied liquid/gas mixture and a wire mesh an optimum separating capacity is realized with an adequate separating efficiency. Too large an angle can result in a relatively poor distribution, whereby the chance of uneven break-through increases, while too small an angle can result in too little effective area enlargement.

In a further preferred embodiment of the invention the feed part and the discharge part of the channel are aligned relative to each other, which limits to a minimum the pressure drop at the position of the transition between the feed part and the discharge part.

According to another aspect of the present invention there is provided a method for separating a mixture of liquid and gas into a substantially gas-containing gas fraction and a substantially liquid-containing liquid fraction, comprising the steps of:
feeding the liquid/gas mixture via a feed part of a channel;
guiding the liquid/gas mixture through one or more wire meshes, against which the liquid is collected for the purpose of separating the supplied liquid/gas mixture into a liquid fraction and a gas fraction, wherein the wire meshes are arranged obliquely relative to the flow direction of the gas/liquid mixture in the channel and wherein the liquid/gas mixture is guided in a direction substantially transversely of the relevant wire mesh;
discharging the gas fraction via a discharge part of the channel.

By guiding the liquid/gas mixture through the wire mesh in this manner the speed increases at the location of the wire mesh to a value associated with the enlarged area of the obliquely placed wire mesh onto which flow takes place. The higher speed has the consequence that a larger quantity of mixture can be treated relative to the dimensions of the channel in cross-section, with the result that the separating capacity of the separating device increases.

The invention also relates to a wire mesh which its evidently intended for the above stated separating device. Such a wire mesh comprises a number of guide fins arranged through the wire mesh and/or a number of guide fins fitting onto the surface of the wire mesh. A number of these guide fins preferably comprise a body part which protrudes through the wire mesh and on both sides of which there are provided bent end portions. In the assembled state the body parts of guide fins situated adjacently of each other extend substantially parallel to each other. This is also the case for the end portions on the outer ends of the body parts. When guide fins are situated close to the channel wall, one of the end portions or both of the end portions can be omitted so as not to have an adverse effect on the flow close to the channel wall.

Further advantages, features and details of the present invention will be elucidated on the basis of the following description of the preferred embodiment thereof. Reference is made in the description to the figures, in which:
Figure 1 shows a partly schematic view in perspective of the preferred embodiment of the invention; and
Figure 2 shows a more detailed perspective view of the embodiment of figure 1.

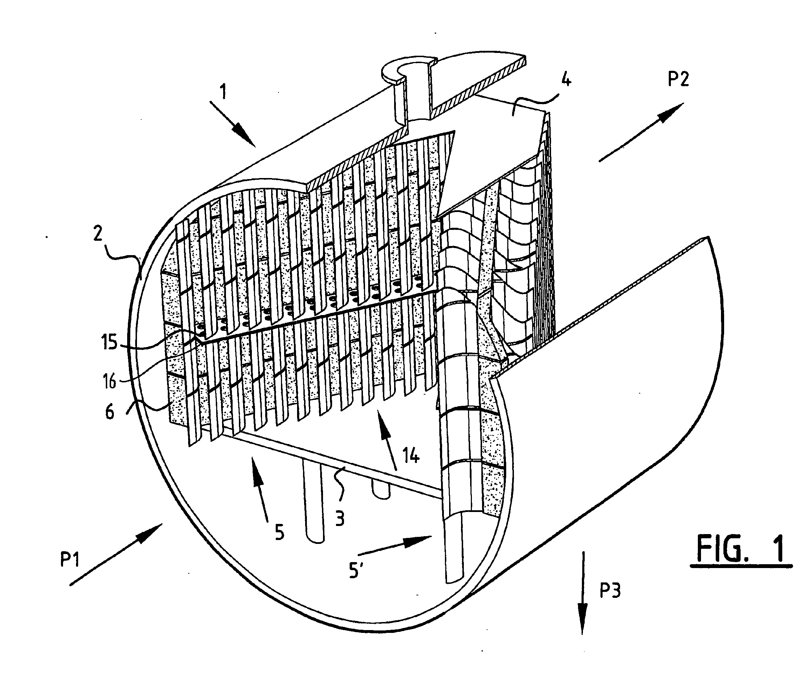

Figure 1 shows a horizontal transport pipeline 1 along which is transported a :mixture of liquid and gas, in particular a mixture of oil and/or water and/or natural gas. The mixture flow through the channel which is bounded by inner wall 2 of transport pipeline 1, a lower flat plate 3 and an upper flat plate 4. In the upstream part of the channel the mixture flows in the direction of arrow P₁, while in the downstream part of the channel the mixture flows in the direction of arrow P₂. In the shown embodiment both parts of the channel lie mutually in line and the flow direction in the upstream part is the same as the flow direction in the downstream part. Although this is recommended with a view to a low flow resistance it does not however always have to be the case. The upstream and downstream part can extend at a random angle relative to each other.

In said channel, between the upstream and downstream part thereof, is arranged a separating device 14. Separating device 14 comprises one or more wire meshes 5, 5'. The wire meshes consist of a layer of wire, preferably manufactured from steel, which are placed closely together or closely knitted and are known in the field of separating devices as wire mesh pads.

In the shown embodiment there are provided two wire mesh pads which are each positioned obliquely relative to the longitudinal direction of the channel. The left-hand wire mesh 5 is arranged in the upstream part at a determined angle relative to the flow direction (P₁), while the second wire mesh pad 5' is arranged at substantially the same angle relative to the flow direction (or the longitudinal direction of the upstream part of the channel), this such that the outer ends of wire meshes 5 and 5' mutually connect. The thus positioned wire meshes therefore extend in a V-shape in the channel.

Figure 1 shows that a wire mesh is divided into two compartments by a partition 16. Such a partition can be omitted in relatively low wire meshes.

When a mixture of liquid and gas is supplied (arrow P₁) via the upstream part of the channel, it arrives at the separating device for separating the gas from the liquid. This takes place by guiding the mixture of liquid and gas through wire mesh pads 5, 5', wherein the liquid in the mixture collides with the wires of the wire mesh. The liquid droplets coalesce with the wire mesh and form a liquid layer in the wire mesh, which liquid layer displaces downward under the influence of gravity and is drained in the direction of arrow P₃ via a drain channel (not shown). The liquid in the compartment above partition 16 enters the lower compartment via perforations 15 provided in partition 16 and is then drained via the drain channel. The remaining flow, which contains mainly gas, continues on its way through the channel in the direction of arrow P₂, preferably to a subsequent separating device of another type, such as for instance a separating cyclone or the like.

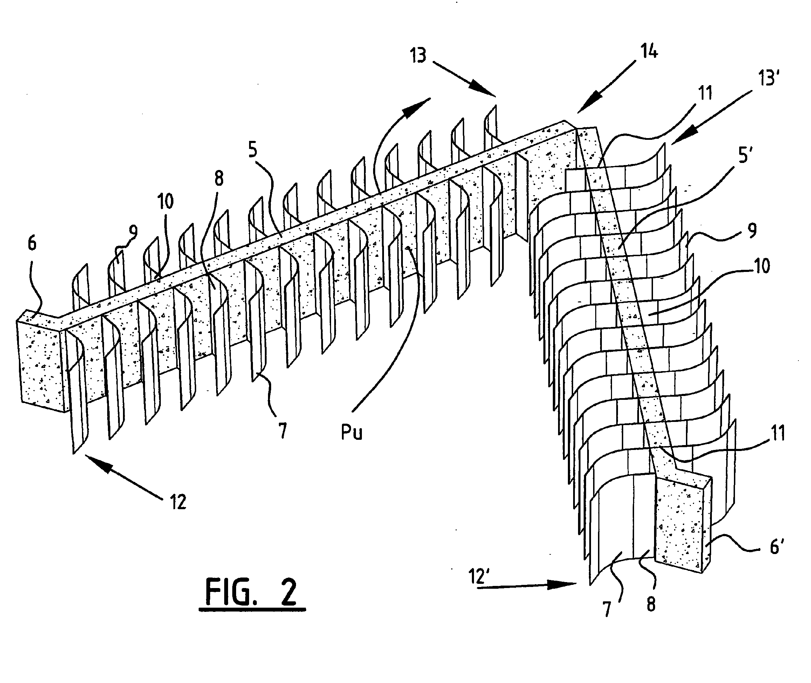

Figure 2 shows separating device 14 in more detail. Wire mesh 5 is fixed at one end to wire mesh 5'. On the other end the wire meshes are provided with bent wire mesh parts 6,6' which are formed such that in the assembled state they fit closely against inner wall 2 of transport pipeline 1.

The left-hand wire mesh 5 is provided with a large number of guide fins ordered substantially parallel to each other. At the upstream end of wire mesh 5 the guide fins consist of a body 8 which is arranged connecting against wire mesh 5, as well as a curved part 7. At the downstream side the guide fins consist of a body 10 arranged connecting against the downstream surface of wire mesh pad 5 and a curved part 9. The bodies 8 of the guide fins are positioned substantially parallel to each other. The bodies 10 of the different guide fins also extend parallel to each other. The guide fins are herein formed such that the direction of the supplied mixture (arrow P₁) is changed with as little pressure loss as possible so that the mixture is directed substantially perpendicularly of the upstream surface of wire mesh 5 and flows through the wire mesh in this direction. At the downstream side the curved parts 9 ensure that the mixture flowing therealong takes on the desired flow direction P₂ in the downstream part of the channel.

The guide fin which in the assembled state is situated as closely as possible to the channel wall, i.e. guide fin 12, and the guide fin which is situated as closely as possible to the point where the two wire meshes 5,5' come together, i.e. guide fin 13, have a slightly modified form in order to prevent the flow of the mixture flowing along these guide fins from being adversely affected by respectively the channel wall and the opposite wire mesh 5'.

Figure 2 shows that the right-hand wire mesh 5' is also provided with guide fins. These are however of a second type, in which the guide fins extend through wire mesh 5'. This means that the body parts 8 and 10 are mutually connected by a body part 11.

It is noted that in the shown preferred embodiments the upstream guide fins are aligned with the downstream guide fins. In other preferred embodiments which are not shown, the upstream and downstream guide fins can however be offset relative to each other.

The shown embodiments further relate to a horizontally disposed transport pipeline. The invention can however also be applied to inclining or even vertical transport pipelines, wherein transport pipeline must furthermore be understood to also mean a column, vessel or any random container.

It will be apparent that, in accordance with the specific application, all guide fins can be manufactured from the first described type or from the second described type or from the different types used together. Instead of two relatively small wire meshes 5,5' a single wire mesh can also be applied or more than two wire meshes can be applied. These embodiments also lie within the scope of the invention.

The angle between the flow direction of the supplied mixture of liquid and gas and the wire mesh amounts to between 0 and 80' and in the shown embodiment to about 45'. At this angle an optimum is achieved between a good separating efficiency on the one hand and a sufficiently large separating capacity on the other.

The present invention is not limited to the above described preferred embodiment thereof; the rights sought are defined in the following claims, within the scope of which many modifications can be envisaged.

## Claims

1. Separating device (14) for separating a mixture of liquid and gas into a substantially gas-containing gas fraction and a substantially liquid-containing liquid fraction, comprising:
a channel which comprises a feed part for feeding the liquid/gas mixture and a discharge part for discharging the gas fraction;
separating means (5, 5', 8-12) arranged in the channel between the feed part and discharge part for separating the supplied liquid/gas mixture into a liquide fraction and a gas fraction, the separating means being arranged obliquely in the channel to enlarge the area of onto which flow takes place;
**characterized in that** the separating means comprise at least one wire mesh (5, 5'), against which wires liquid is collected, and **in that** guide means (8-12) for guiding the supplied mixture substantially transversely of the area of the wire mesh onto which flow takes place, are provided in the channel, wherein the guide means comprise a number of guide fins (9-11) arranged through the wire mesh 5, 5').

2. Separating device as claimed in claim 1, wherein the guide means comprise a number of guide fins arranged fitting onto the outer surface of the wire mesh.

3. Separating device as claimed in claim 1 or 2, wherein a guide fin is constructed from a body part (11) protruding through the wire mesh, an upstream end part extending substantially parallel to the flow direction in the feed part of the channel and a downstream end part extending substantially parallel to the flow direction in the discharge part of the channel.

4. Separating device as claimed in any of the foregoing claims, wherein a downward extending liquid drain channel is connected to the channel for draining the liquid fraction under the influence of gravity.

5. Separating device as claimed in any of the foregoing claims, wherein a first wire mesh and a second wire mesh are disposed in a V-shape in the channel,

6. Separating device as claimed in any of the claims 2-6, wherein a number of partitions (16) provided with perforations (15) are arranged substantially transversely of the guide fins for distributing the liquid/gas mixture flow into a number of compartments.

7. Device as claimed in any of the foregoing claims, wherein the angle between the flow direction of the supplied liquid/gas mixture and a wire mesh amounts to between 10 and 80°, and preferably between 40 and 50°.

8. Separating device as claimed in any of the foregoing claims, wherein the feed part and the discharge part of the channel are aligned relative to each other.

9. Method for separating a mixture of liquid and gas into a substantially gas-containing gas fraction and a substantially liquid-containing liquid fraction, comprising the steps of:
feeding the liquid/gas mixture via a feed part of a channel;
guiding the liquid/gas mixture through one or more separating means (5, 5') for the purpose of separating the supplied liquid/gas mixture into a liquid fraction and a gas fraction, wherein the separating means are arranged obliquely relative to the flow direction of the gas/liquid mixture in the channel;
discharging the gas fraction via a discharge part of the channel;
**characterized in that** the separating means are wire meshes against which the liquid is collected and **in that** the liquid/gas mixture is guided in a direction substantially transversely of the relevant wire mesh, comprising of separating the liquid/gas mixture in the separating device as claimed in any of the claims 1-9.

10. Method as claimed in claim 9, comprising of draining the collected liquid fraction via a liquid channel under the influence of gravity.

## Patentansprüche

1. Trennvorrichtung (14) zum Trennen eines Gemischs aus Flüssigkeit und Gas in einen im Wesentlichen Gas enthaltenden Gasanteil und einen im Wesentlichen Flüssigkeit enthaltenden Flüssigkeitsanteil, aufweisend:
einen Kanal, der einen Zuführabschnitt zum Zuführen des Flüssigkeits- / Gasgemischs und einen Ableitungsabschnitt zum Ableiten des Gasanteils aufweist,
Trennmittel (5, 5', 8 - 12), die in dem Kanal zwischen dem Zuführabschnitt und dem Ableitungsabschnitt angeordnet sind, um das zugeführte Flüssigkeits- / Gasgemisch in einen Flüssigkeitsanteil und einen Gasanteil zu trennen, wobei die Trennmittel schräg in dem Kanal angeordnet sind, um den Bereich, auf den die Strömung erfolgt, zu vergrößern,
**dadurch gekennzeichnet, dass** die Trennmittel mindestens ein Drahtgeflecht (5, 5') aufweisen, wobei an den Drähten Flüssigkeit gesammelt wird, und dass Führungsmittel (8 - 12) in dem Kanal vorgesehen sind, um das zugeführte Gemisch im Wesentlichen quer zu dem Bereich des Drahtgeflechts, auf den die Strömung erfolgt, zu leiten, wobei die Führungsmittel eine Anzahl von Führungsfinnen (9 - 11) aufweisen, die durch das Drahtgeflecht (5, 5') hindurch angeordnet sind.

2. Trennvorrichtung gemäß Anspruch 1, wobei die Führungsmittel eine Anzahl von Führungsfinnen aufweisen, die derart angeordnet sind, dass sie an der Außenfläche des Drahtgeflechts angebracht sind.

3. Trennvorrichtung gemäß Anspruch 1 oder 2, wobei eine Führungsfinne derart aufgebaut ist, dass sie von einem Körperabschnitt (11) aus durch das Drahtgeflecht hindurch hervorsteht, wobei sich ein Stromaufwärts-Endabschnitt im Wesentlichen parallel zu der Strömungsrichtung in dem Zuführabschnitt des Kanals erstreckt und ein Stromabwärts-Endabschnitt sich im Wesentlichen parallel zu der Strömungsrichtung in dem Ableitungsabschnitt des Kanals erstreckt.

4. Trennvorrichtung gemäß irgendeinem der vorhergehenden Ansprüche, wobei ein sich nach unten erstreckender Flüssigkeitsablasskanal mit dem Kanal verbunden ist, um den Flüssigkeitsanteil unter dem Einfluss von Schwerkraft abzulassen.

5. Trennvorrichtung gemäß irgendeinem der vorhergehenden Ansprüche, wobei ein erstes Drahtgeflecht und ein zweites Drahtgeflecht in einer V-Form in dem Kanal angeordnet sind.

6. Trennvorrichtung gemäß irgendeinem der Ansprüche 2 bis 6, wobei eine Anzahl von mit Perforierungen (15) versehenen Trennwänden (16) im Wesentlichen quer zu den Führungsfinnen angeordnet ist, um den Flüssigkeits- / Gasgemisch-Strom in eine Anzahl von Kammern zu verteilen.

7. Vorrichtung gemäß irgendeinem der vorhergehenden Ansprüche, wobei der Winkel zwischen der Strömungsrichtung des zugeführten Flüssigkeits- / Gasgemischs und einem Drahtgeflecht zwischen 10° und 80° und vorzugsweise zwischen 40° und 50° beträgt.

8. Trennvorrichtung gemäß irgendeinem der vorhergehenden Ansprüche, wobei der Zuführabschnitt und der Ableitungsabschnitt des Kanals bezüglich einander ausgerichtet sind.

9. Verfahren zum Trennen eines Gemischs aus Flüssigkeit und Gas in einen im Wesentlichen Gas enthaltenden Gasanteil und einen im Wesentlichen Flüssigkeit enthaltenden Flüssigkeitsanteil, aufweisend die folgenden Schritte:
Zuführen des Flüssigkeits- / Gasgemischs über einen Zuführabschnitt eines Kanals,
Leiten des Flüssigkeits- / Gasgemischs durch ein oder mehr Trennmittel (5, 5') hindurch zum Zweck des Trennens des zugeführten Flüssigkeits- / Gasgemischs in einen Flüssigkeitsanteil und einen Gasanteil, wobei die Trennmittel bezüglich der Strömungsrichtung des Gas- / Flüssigkeitsgemischs schräg in dem Kanal angeordnet sind,
Ableiten des Gasanteils über einen Ableitungsabschnitt des Kanals,
**dadurch gekennzeichnet, dass** die Trennmittel Drahtgeflechte sind, an denen die Flüssigkeit gesammelt wird, und dass das Flüssigkeits- / Gasgemisch in einer Richtung im Wesentlichen quer zu dem jeweiligen Drahtgeflecht geleitet wird, aufweisend das Trennen des Flüssigkeits- / Gasgemischs in der Trennvorrichtung gemäß irgendeinem der Ansprüche 1 bis 9.

10. Verfahren gemäß Anspruch 9, aufweisend das Ablassen des gesammelten Flüssigkeitsanteils unter dem Einfluss von Schwerkraft über einen Flüssigkeitskanal.

## Revendications

1. Dispositif de séparation (14) pour séparer un mélange de liquide et de gaz en une fraction de gaz contenant sensiblement du gaz et une fraction de liquide contenant sensiblement du liquide, comprenant:
un canal qui comprend une partie d'alimentation pour alimenter le mélange liquide/gaz et une partie de décharge pour décharger la fraction de gaz ;
des moyens de séparation (5, 5', 8-12) agencés dans le canal entre la partie d'alimentation et la partie de décharge pour séparer le mélange liquide/gaz fourni en une fraction de liquide et une fraction de gaz, les moyens de séparation étant agencés de façon oblique dans le canal pour élargir la superficie sur laquelle l'écoulement se produit ;
**caractérisé en ce que** les moyens de séparation comprennent au moins un treillis métallique (5, 5'), contre les fils métalliques duquel le liquide est collecté, et **en ce que** des moyens de guidage (8-12) pour guider le mélange fourni de façon sensiblement transversale par rapport à la superficie du treillis métallique sur lequel se produit l'écoulement, sont disposés dans le canal, les moyens de guidage comprenant une pluralité d'ailettes de guidage (9-11) agencées à travers la treillis métallique (5, 5').

2. Dispositif de séparation selon la revendication 1, **caractérisé en ce que** les moyens de guidage comprennent une pluralité d'ailettes de guidage agencées en ajustement sur la surface extérieure du treillis métallique.

3. Dispositif de séparation selon la revendication 1 ou 2, dans lequel une ailette de guidage est montée à partir d'une partie de corps (11) faisant saillie à travers le treillis métallique, une partie d'extrémité en amont s'étendant de façon sensiblement parallèle à la direction d'écoulement dans la partie d'alimentation du canal et une partie d'extrémité en aval s'étendant de façon sensiblement parallèle à la direction d'écoulement dans la partie de décharge du canal.

4. Dispositif de séparation selon l'une quelconque des revendications précédentes, dans lequel un canal de drainage de liquide s'étendant vers le bas est raccordé au canal pour drainer la fraction de liquide sous l'effet de la gravité.

5. Dispositif de séparation selon l'une quelconque des revendications précédentes, dans lequel un premier treillis métallique et un deuxième treillis métallique sont disposés de manière à former un V dans le canal.

6. Dispositif de séparation selon l'une quelconque des revendications 2 à 6, dans lequel une pluralité de séparations (16) pourvues de perforations (15) sont agencées de façon sensiblement transversale par rapport aux ailettes de guidage en vue de distribuer le flux de mélange liquide/gaz dans une pluralité de compartiments.

7. Dispositif selon l'une quelconque des revendications précédentes, dans lequel l'angle entre la direction d'écoulement du mélange liquide/gaz fourni et un treillis métallique est compris entre 10 et 80°, et de préférence entre 40 et 50°.

8. Dispositif de séparation selon l'une quelconque des revendications précédentes, dans lequel la partie d'alimentation et la partie de décharge du canal sont alignées l'une par rapport à l'autre.

9. Procédé pour séparer un mélange de liquide et de gaz en une fraction de gaz contenant sensiblement du gaz et une fraction de liquide contenant sensiblement du liquide, comprenant les étapes consistant à :
alimenter le mélange liquide/gaz via une partie d'alimentation d'un canal ;
guider le mélange liquide/gaz à travers un ou plusieurs moyens de séparation (5, 5') dans le but de séparer le mélange liquide/gaz fourni en une fraction de liquide et une fraction de gaz, les moyens de séparation étant agencés de façon oblique par rapport à la direction d'écoulement du mélange gaz/liquide dans le canal ;
décharger la fraction de gaz via une partie de décharge du canal ;
**caractérisé en ce que** les moyens de séparation sont des treillis métalliques contre lesquels le liquide est collecté et **en ce que** le mélange liquide/gaz est guidé dans une direction sensiblement transversale par rapport au treillis métallique en question, comprenant la séparation du mélange liquide/gaz dans le dispositif de séparation selon l'une quelconque des revendications 1 à 9.

10. Procédé selon la revendication 9, comprenant le drainage de la fraction de liquide collectée via un canal de liquide sous l'effet de la gravité.
